# EUROPÄISCHE PATENTSCHRIFT

(11) **EP 1 476 650 B1**
(45) Veröffentlichungstag und Bekanntmachung des Hinweises auf die Patenterteilung: **30.05.2007**
(21) Anmeldenummer: 02806791.6
(22) Anmeldetag: 28.11.2002
(51) Int. Cl.: F02M 23/00, F01N 3/30, F02D 13/02

(54) **VERFAHREN UND VORRICHTUNG ZUR STEUERUNG DER ÖFFNUNG EINES EI NLASSVENTILS EINER BRENNKRAFTMASCHINE**
METHOD AND DEVICE FOR CONTROLLING THE OPENING OF AN INLET VALVE OF AN INTERNAL COMBUSTION ENGINE
PROCEDE ET DISPOSITIF POUR PILOTER L'OUVERTURE D'UNE SOUPAPE D'ADMISSION DE MOTEUR A COMBUSTION INTERNE

(30) Priorität: 14.02.2002 DE 10205967
(43) Veröffentlichungstag der Anmeldung: 17.11.2004
(73) Patentinhaber: ROBERT BOSCH GMBH, 70442 Stuttgart (DE)
(72) Erfinder: GAESSLER, Hermann, 71665 Vaihingen (DE); WILD, Ernst, 71739 Oberriexingen (DE); DIEHL, Udo, 70195 Stuttgart (DE); MISCHKER, Karsten, 71229 Leonberg (DE); WALTER, Rainer, 74385 Pleidelsheim (DE); WEISS, Ruediger, 71159 Moetzingen (DE); BAUMANN, Andreas, 71665 Vaihingen/Enz (DE); REUSCHENBACH, Lutz, 70469 Stuttgart (DE); ROSENAU, Bernd, 71679 Asperg (DE); ULM, Juergen, 71735 Eberdingen (DE); SCHIEMANN, Juergen, 71706 Markgroeningen (DE); GROSSE, Christian, 70806 Kornwestheim (DE); MALLEBREIN, Georg, 70825 Korntal-Muenchingen (DE); BEUCHE, Volker, 70372 Stuttgart (DE); REIMER, Stefan, 71706 Markgroeningen (DE)
(86) Internationale Anmeldenummer: PCT/DE2002/004366
(87) Internationale Veröffentlichungsnummer: WO 2003/069148

(56) Entgegenhaltungen:
- EP-A- 0 473 258
- WO-A-99/32781
- DE-A- 10 018 303
- US-A- 3 814 065

## Beschreibung

### Stand der Technik

Die Erfindung betrifft ein Verfahren und eine Vorrichtung zur Steuerung der Öffnung wenigstens eines Einlassventils eines Brennraums einer periodisch arbeitenden Kolbenbrennkraftmaschine, wobei wenigstens ein Einlassventil des Brennraums während einer ersten Teilperiode einer Arbeitsperiode der Kolbenbrennkraftmaschine zur Füllung des Brennraums geöffnet wird und wobei wenigstens ein Einlassventil des Brennraums während einer zweiten Teilperiode der Arbeitsperiode geöffnet wird.

Ein solches Verfahren und eine solche Vorrichtung sind aus der EP 473 258 A2 bekannt. Nach dieser Schrift wird das Einlassventil während einer Arbeitsperiode zweimal geöffnet. Die erste Öffnung beginnt im Bereich des oberen Totpunktes eines Kolbens und endet im Ansaugtakt während der Abwärtsbewegung des Kolbens.

Die zweite Öffnung beginnt im oder nach dem unteren Totpunkt des Kolbens zu Beginn des Verdichtungstaktes und endet vor dem Ende des Verdichtungstaktes. Das Verfahren wird bei niedrigen Belastungen der Brennkraftmaschine verwendet, die sich durch eine geringe Füllung des Brennraums mit brennfähigem Gemisch auszeichnen. Diese geringfügige Menge kann bereits mit einer relativ kurzen ersten Öffnung des Einlassventils angesaugt werden. Das Einsaugventil kann daher vor dem Ende des Ansaugtaktes geschlossen werden.

Durch den bei geschlossenem Einlassventil weiter in Richtung des unteren Totpunktes laufenden Kolben wird im Brennraum ein sinkender Druck erzeugt, dessen Absolutwert den Wert des Saugrohrdruckes unterschreitet. Aufgrund dieses Druckgefälles strömt beim zweiten Öffnen des Einlassventils im unteren Totpunkt oder nach dem unteren Totpunkt weitere Luft oder weiteres Gemisch in den Brennraum. Die aufgrund des Druckgefälles hervorgerufene Strömung verursacht eine erwünschte Turbulenz im Brennraum, was die Gemischaufbereitung für die nachfolgende Verbrennung verbessert.

Soweit es um die Aufheizung eines Katalysators im Abgas der Brennkraftmaschine geht, regt diese Schrift eine frühere Öffnung des Auslassventiles im Verbrennungstakt an, weil auf diese Weise weniger Energie in mechanische Arbeit umgewandelt werde und als Folge die Abgase heißer seien. Um einen Katalysator aufzuheizen und um die Kohlenwasserstoffemissionen nach einem Kaltstart einer Brennkraftmaschine zu senken, wird häufig sogenannte Sekundärluft hinter die Auslassventile der Brennkraftmaschine eingeblasen. Die Sekundärluft wird als Frischluft über eine elektrische Pumpe eingeblasen und ermöglicht die Oxidation unverbrannter Kohlenwasserstoffe im noch heißen Abgas. Dabei kann die Brennkraftmaschine mit Kraftstoffüberschuss betrieben werden, um Kohlenwasserstoffe als Reaktionspartner für die eingeblasene Sekundärluft zu liefern. Die Nachoxidation der nicht im Brennraum verbrannten Kohlenwasserstoffe mit der eingeblasenen Sekundärluft erzeugt eine exotherme Reaktion im Abgassystem und ermöglicht so eine schnelle Aufheizung des Katalysators.

Dabei wird zwischen einer Reaktion im Abgaskrümmer und einer Reaktion im Katalysator unterschieden. Wird eine Reaktion im Krümmer erwünscht, muss das Abgas mit der Sekundärluft so früh wie möglich nach der Verbrennung der Brennraumfüllung zusammenkommen. Deshalb liegt die Einleitstelle von Sekundärluft oft direkt bei den Auslassventilen der Brennkraftmaschine.

Neben der klassischen Sekundärlufteinblasung mit Hilfe einer elektrischen Pumpe ist es bekannt, einzelne Zylinder einer Brennkraftmaschine abwechselnd mit Kraftstoffüberschuss und mit Sauerstoffüberschuss zu betreiben, um beim Zusammenführen des Abgases aus der Verbrennung mit Kraftstoffüberschuss mit dem Abgas aus der Verbrennung mit Luftüberschuss einen Sekundärlufteffekt zu erzielen.

Die Aufgabe der Erfindung besteht in der Angabe eines Verfahrens und einer Vorrichtung für einen Verbrennungsmotor mit vollvariabler Ventilsteuerung, die eine Zufuhr von Sekundärluft zum Abgas ohne Sekundärluftpumpe und Sekundärluftventil ermöglichen. Dabei soll die Sekundärluftmenge variierbar sein.

Diese Aufgabe wird bei einem Verfahren der eingangs genannten Art dadurch erreicht, dass die zweite Teilperiode nach der Verbrennung der Brennraumfüllung beginnt und keine Überschneidung mit der ersten Teilperiode aufweist.

Mit Hilfe des erfindungsgemäßen Verfahrens ist es möglich, eine Nachoxidation von unverbrannten Kohlenwasserstoffen direkt im Brennraum zu erreichen. Dazu wird in der Expansionsphase das Einlassventil zu dem Zeitpunkt geöffnet, in dem der Druck im Brennraum etwa den Saugrohrdruck erreicht hat oder unterschreitet. Die in diesem Fall in das noch sehr heiße Abgas strömende Frischluft sorgt für eine Nachoxidation von unverbrannten Kohlenwasserstoffen. Durch die Wahl des Ventilhubs und/oder des Schließzeitpunkts des Einlassventils kann die Sekundärluftmenge variiert werden. Dadurch kann eine Sekundärluftpumpe und ein Sekundärluftventil eingespart werden. Voraussetzung ist lediglich, dass die vollvariable Ventilsteuerung ein zweimaliges Öffnen des Einlassventils pro Arbeitsperiode ermöglicht. Dabei dient das erste Öffnung der Füllung des Brennraums mit Luft zur Erzeugung der für das geforderte Drehmoment erforderlichen Brennraumfüllung, und das zweite Öffnen dient der Sekundärluftdosierung.

Eine Ausgestaltung des Verfahrens sieht vor, dass die zweite Teilperiode vor einem unteren Totpunkt des dem Brennraum zugehörigen Kolbens beginnt. Der Druck im Brennraum sinkt mit der Annäherung des Kolbens an den unteren Totpunkt. Daher kann aus der Position des Kolbens auf den Druck im Zylinder geschlossen werden.

Die Auslösung der zweiten Teilperiode in Abhängigkeit von der Kolbenposition besitzt damit den Vorteil, dass der Zeitpunkt, zu dem der Zylinder- oder Brennrauminnendruck den Saugrohrdruck unterschreitet, ohne einen speziellen Brennraumdrucksensor angegeben werden kann.

Ganz allgemein sieht eine weitere Ausgestaltung vor, dass die zweite Teilperiode dann beginnt, wenn der Druck auf der dem Brennraum zugewandten Seite des Einlassventils auf den Wert der dem Brennraum abgewandten Seite des Einlassventils abgesunken ist oder diesen sogar unterschritten hat.

Eine weitere Ausgestaltung sieht vor, dass die Länge der zweiten Teilperiode und/oder das Ausmaß der Öffnung des Einlassventils von Betriebsparametern der Kolbenbrennkraftmaschine abhängig ist.

Eine weitere Ausgestaltung sieht vor, daß die Füllung des Brennraums durch ein frühes Schließen des Einlaßventils beschränkt wird und daß das Verfahren bei möglichst hohem Saugrohrdruck durchgeführt wird.

Eine weitere Ausgestaltung sieht vor, dass das Verfahren nur unterhalb eines Schwellenwertes für die Brennraumfüllung durchgeführt wird. Der Grund dafür ist, dass bei hohen Brennraumfüllungen am Ende des Expansionstaktes nicht der zum Ansaugen von Sekundärluft aus dem Saugrohr notwendige niedrige Absolutdruck im Brennraum/Zylinder erreicht wird.

Eine weitere Maßnahme sieht vor, dass bei einem Brennraum mit mehreren Einlassventilen wenigstens ein erstes Einlassventil während der ersten Teilperiode geöffnet wird und wenigstens ein zweites Einlassventil während der zweiten Teilperiode geöffnet wird.

Die Erfindung richtet sich auch auf eine Steuereinrichtung zur Durchführung wenigstens eines der genannten Verfahren, Ausgestaltungen und Maßnahmen. Eine Ausgestaltung dieser Steuereinrichtung sieht vor, dass die Steuereinrichtung die Leerlaufdrehzahl der-Kolbenbrennkraftmaschine erhöht, wenn eines der oben genannten Verfahren, Ausgestaltungen oder Maßnahmen durchgeführt wird. Eine erhöhte Leerlaufdrehzahl senkt die für den Leerlauf notwendige Frischluftfüllung. Daher kann durch eine angehobene Leerlaufdrehzahl der oben genannte Schwellenwert für die Brennraumfüllung unterschritten werden. Es hat sich nämlich gezeigt, dass das Verfahren nur für Frischluftfüllungen des Brennraums bis etwa 35% der maximalen Brennraumfüllungen zufriedenstellend abläuft. Bei höheren Füllungen liegt der Expansionsenddruck nicht unterhalb des Saugrohrdrucks. Die Kohlenwasserstoffemissionen müssen dann auf andere Art verringert werden. Bei höheren Frischluftfüllungen ist die Magerlauffähigkeit der Kolbenbrennkraftmaschine besser.

Daher könnte bei Brennraumfüllungen über 35% der Maximalfüllung die Brennkraftmaschine zunehmend mager betrieben werden.

Ebenfalls zur Senkung der Füllung sieht eine weitere Ausgestaltung vor, dass die Steuereinrichtung die Schaltpunkte eines automatischen Getriebes zu höheren Drehzahlen hin verlegt, wenn ein Verfahren zur Sekundärlufteinblasung durch eine Öffnung eines Einlassventils am Ende des Expansionstaktes durchgeführt werden soll. Die Erfindung richtet sich daher auch auf eine Steuereinrichtung, die sich dadurch auszeichnet, die Kolbenbrennkraftmaschine bei der Durchführung der Sekundärlufteinblasung durch Öffnung eines Einlassventils am Ende des Expansionstaktes mit zunehmender Brennraumfüllung zunehmend magerer, d. h. mit kraftstoffärmerem Kraftstoff/Luftgemisch zu betreiben.

Im Folgenden werden Ausführungsbeispiele der Erfindung mit Bezug auf die Figuren erläutert.
Die Figur 1 zeigt das technische Umfeld, in dem die Erfindung ihre Wirkung entfaltet.
Figur 2 zeigt schematisch ein Ausführungsbeispiel einer vollvariablen Ventilsteuerung.
Figur 3 offenbart ein Ausführungsbeispiel des erfindungsgemäßen Verfahrens in der Form eines Flussdiagrammes.
FIG. 4 zeigt eine Abwandlung des Gegenstandes der Fig. 3 und die
Figuren 5 bis 8 zeigen die Verläufe verschiedener Größen über der Zeit oder über dem Kurbelwellenwinkel, wie sie bei der Durchführung der Erfindung auftreten.

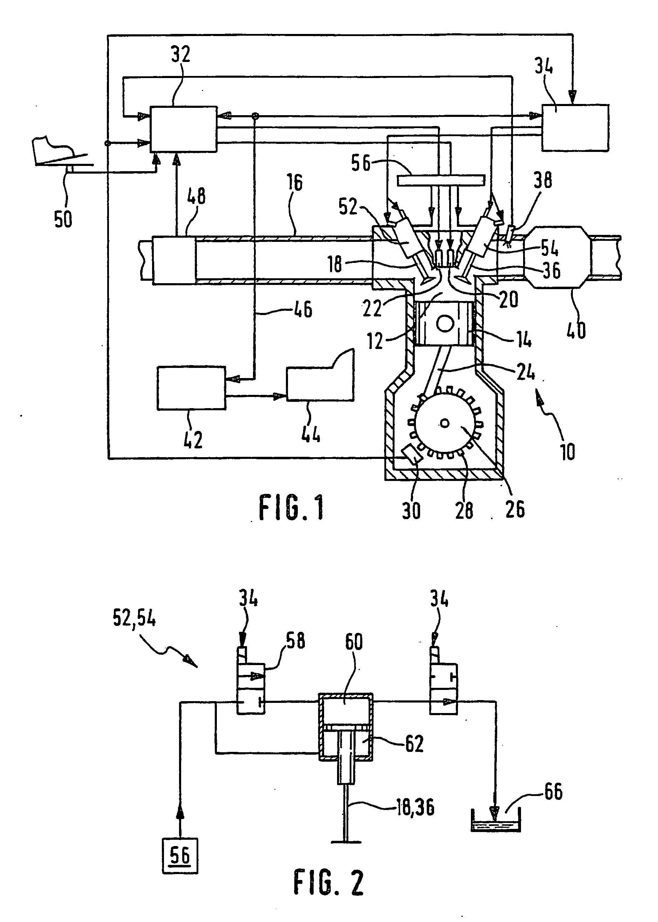

Die Ziffer 10 in der Figur 1 bezeichnet eine Kolbenbrennkraftmaschine mit einem Brennraum 12, der von einem Kolben 14 beweglich abgedichtet wird. Der Brennraum 12 wird aus einem Saugrohr 16 über ein Einlassventil 18 bei sich abwärts bewegendem Kolben 14 mit Luft befüllt. Der Brennraumfüllung mit Luft wird über ein Einspritzventil 20 Kraftstoff zugeführt und das entstandene Kraftstoff/Luftgemisch wird mittels einer Zündkerze 22 gezündet. Die bei der Verbrennung entstehende Kraft auf den Kolben 14 wird über einen Kurbeltrieb 24 in eine Drehbewegung einer Kurbelwelle umgewandelt. Mit der Kurbelwelle ist ein Geberrad 26 drehfest verbunden, das ferromagnetische Markierungen 28 trägt. Bei der Drehbewegung des Geberrades 26 streichen die ferromagnetischen Markierungen 28 an einem Induktivsensor 30 vorbei, der daraus ein periodisches elektrisches Signal bildet und an ein Motorsteuergerät 32 und ein Ventilsteuergerät 34 liefert. Sowohl das Motorsteuergerät 32 als auch das Ventilsteuergerät 34 können daraus die Position des Kolbens ableiten und die Einspritzung von Kraftstoff, die Auslösung der Zündung sowie die Betätigung der Einlassventile 18 und der Auslassventile 36 phasensynchron mit der Bewegung des Kolbens 14 steuern. So wird beispielsweise das Auslassventil 36 zum Ausstoßen der verbrannten Gase aus dem Brennraum 12 bei wiederaufwärtslaufendem Kolben 14 geöffnet.

Ein Abgassensor 38, beispielsweise eine sauerstoffempfindliche Lambdasonde oder ein NOx-Sensor oder ein HC-Sensor liefert ein Signal an das Motorsteuergerät 32, um beispielsweise den in einem Ausführungsbeispiel der Erfindung gewünschten Magerbetrieb zu steuern. Die verbrannten Gase durchlaufen einen Katalysator 40, der im betriebswarmen Zustand NOx, CO und HC zu Stickoxid, Kohlendioxid und Wasser konvertiert.

Figur 1 zeigt weiter ein Getriebesteuergerät 42 und ein automatisches Getriebe 44. Die drei Steuergerät 32, 34 und 42 sind über ein Bussystem 46, beispielsweise einen CAN-Bus verbunden. Es versteht sich, dass die Aufteilung der Funktionen auf drei Steuergeräte, die durch einen Bus miteinander kommunizieren, nicht zwingend ist und dass der erforderliche Funktionsumfang auch von einem Einzelsteuergerät mit entsprechender Leistungsfähigkeit abgedeckt werden kann. Die Funktion des Getriebesteuergerätes betrifft eine Weiterbildung der Erfindung. Der dargestellte Steuergeräteverbund aus dem Motorsteuergerät und dem Ventilsteuergerät repräsentiert damit ein Ausführungsbeispiel einer erfindungsgemäßen Vorrichtung.

Dem Motorsteuergerät 32 werden neben den Signalen des Induktivsensors 30 und des Abgassensors 38 weitere Größen zugeführt, insbesondere das Signal eines Luftmassenmessers 48, der die Masse der von der Kolbenbrennkraftmaschine 10 angesaugten Luft erfasst, und eines Fahrpedalsensors 50, der gewissermaßen eine Information über die Drehmomentforderung durch den Fahrer liefert. Das Ventilsteuergerät 34 steuert einen Einlassventilsteller 52 und einen Auslassventilsteller 54 an. Einlassventilsteller 52 und Auslassventilsteller 54 können als elektrohydraulische Stellelemente realisiert sein, die mit einem Hochdruckspeicher 56, der Hydraulikflüssigkeit enthält, in Verbindung stehen.

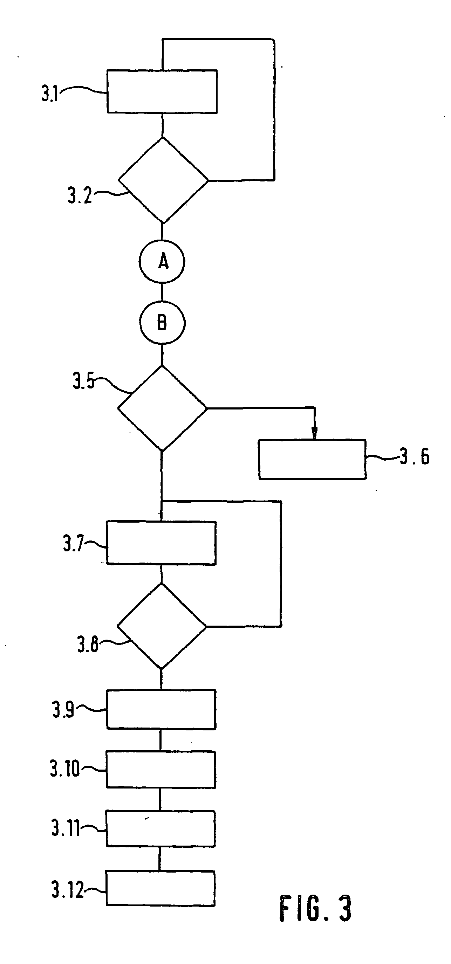

Figur 2 zeigt ein Ausführungsbeispiel eines Einlassventilstellers 52 oder eines Auslassventilsteller 54. Über ein erstes Magnetventil 58 strömt Hydraulikflüssigkeit aus dem Hochdruckspeicher 56 in die Kammer 60, öffnet das Einlassventil 18 oder das Auslassventil 36 und verdrängt die Hydraulikflüssigkeit in der Kammer 62. Ist der gewünschte Ventilhub erreicht, so wird das erste Magnetventil 58 vom Ventilsteuergerät 34 geschlossen. Zum Schließen des Einlassventils 18 bzw. des Auslassventils 36 wird das zweite Magnetventil 64 geöffnet. Dabei bleibt das erste Magnetventil 58 geschlossen. Der ständig an der Kammer 62 anstehende Druck der Hydraulikflüssigkeit schließt das Einlassventil 18 bzw. das Auslassventil 36. Aus der Kammer 62 austretende Hydraulikflüssigkeit wird in einem Reservoir 66 gesammelt. Mit Hilfe des dargestellten Ventilstellers ist für jedes Ventil eine individuelle Ventilansteuerung möglich. Dabei kann die Füllung des Brennraums mit Frischluft durch die Öffnungsdauer und/oder den Hub des Einlassventils 18 eingestellt werden. Zumindest bei niedrigen Drehzahlen ist es möglich, ein Einlassventil mehrfach pro Arbeitsperiode zu öffnen.

Figur 3 zeigt ein Flussdiagramm als Ausführungsbeispiel des erfindungsgemäßen Verfahrens, wie es in dem Verbund der über das Bussystem 46 kommunizierenden Steuergeräte 32, 34 und 42 ablaufen kann. Block 3.1 repräsentiert dabei ein Hauptprogramm zur Steuerung der Kolbenbrennkraftmaschine, wie es bezüglich der Steuerung, der Einspritzung und Zündung im Motorsteuergerät 32 abläuft und wie es bezüglich der Steuerung der Einlassventile 18 und Auslassventile 36 im Ventilsteuergerät 34 abläuft.

In einem Schritt 3.2 wird geprüft, ob die Auslösebedingungen für eine Sekundärlufteinblasung erfüllt sind. Die Auslösebedingungen sind typischerweise dann erfüllt, wenn die Kolbenbrennkraftmaschine 10 im kalten Zustand gestartet wurde. Ist dies nicht der Fall, wird in das Hauptprogramm 3.1 zurückverzweigt. Soll dagegen eine Sekundärlufteinblasung stattfinden, wird über Marken A und B ein Schritt 3.5 erreicht, in dem die relative Füllung des Brennraums oder der Brennräume mit einem Schwellenwert verglichen wird. Der Schwellenwert muss so beschaffen sein, dass relative Brennraumfüllungen, die den Schwellenwert unterschreiten, zu einem relativ niedrigen Verbrennungsenddruck im Brennraum 12 führen.

Es hat sich gezeigt, dass ein Schwellenwert von ca. 35% der maximal unter Normbedingungen erreichten Brennraumfüllung diese Eigenschaft liefert. Wird dieser Schwellenwert im Schritt 3.5 überschritten, kann die erfindungsgemäße Sekundärlufteinblasung über ein Öffnen eines Einlassventils im Bereich des unteren Totpunktes des Kolbens nach der Verbrennung nicht durchgeführt werden. In diesem Fall kann alternativ in einem Schritt 3.6 in ein Motorsteuerungsprogrammmodul verzweigt werden, das die Kolbenbrennkraftmaschine mit magerem Gemisch zur Minimierung der Kohlenwasserstoffemissionen betreibt.

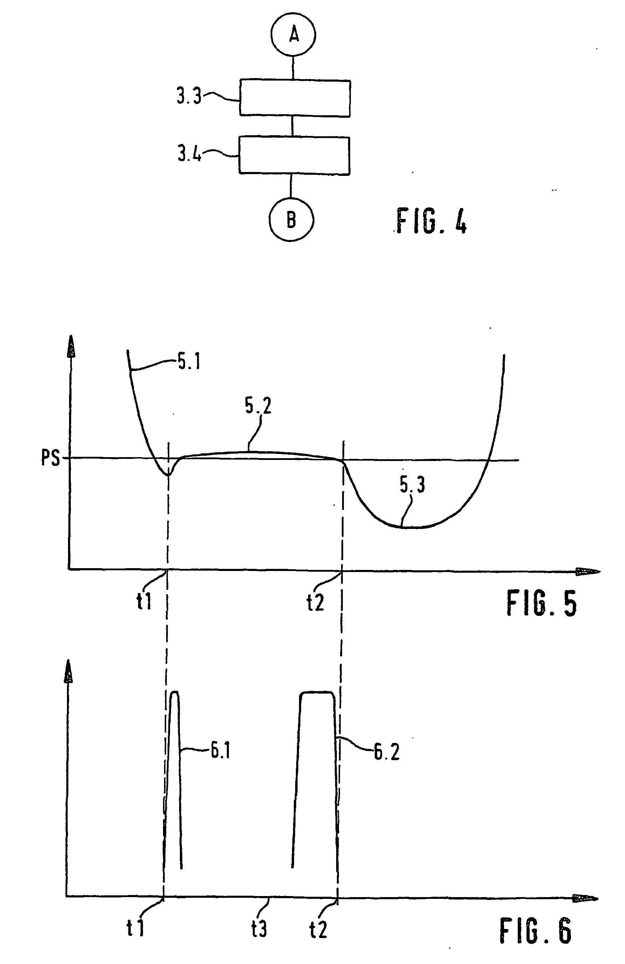

Um eine Sekundärlufteinblasung mit dem erfindungsgemäßen Verfahren durchführen zu können, sollte die Kolbenbrennkraftmaschine 10 mit geringen Brennraumfüllungen betrieben werden. Dies kann durch die Folge der Schritte 3.3 und 3.4 in der Figur 4 gefördert werden. Diese Schritte können daher in der Figur 3 zwischen den genannten Marken A und B durchgeführt werden.

In einem Schritt 3.3 kann z. B. die Leerlaufdrehzahl angehoben werden. Eine erhöhte Leerlaufdrehzahl senkt die für den Leerlauf notwendige Frischluftfüllung. Bei Fahrzeugen mit automatischem Getriebe 44 kann zusätzlich in dem Schritt 3.4 das Getriebeschaltprogramm im Steuergerät 42 so geändert werden, dass die Kolbenbrennkraftmaschine 10 im Mittel mit höherer Drehzahl betrieben wird. Hier gilt wie im Leerlauf, dass eine erhöhte Drehzahl mit einer verringerten Füllung einhergeht, was die Auslösung der erfindungsgemäßen Sekundärlufteinblasung erleichtert oder ermöglicht. Ist die Brennraumfüllung gering genug, so erfolgt im Schritt 3.7 ein Erfassen der Kolbenposition durch Auswerten des Signals des Induktivsensors 30. Bei bekannter Füllung des Brennraums kann aus der Position des Kolbens auf den Brennraumdruck geschlossen werden. Je näher der Kolben im Verbrennungstakt an den unteren Totpunkt heranläuft, desto größer wird das Brennraumvolumen oberhalb des Kolbens und desto geringer wird der Druck im Brennraum. Vor einer Erläuterung der übrigen Schritte 3.8 bis 3.12 werden im folgenden zunächst verschiedene Signalverläufe erläutert.

Die Figur 5 zeigt den Verlauf des Brennraumdrucks für verschiedene Kurbelwellenwinkelgrade, was verschiedenen Stellungen des Kolbens 14 entspricht. Der mit 5.1 gekennzeichnete Abschnitt entspricht dem Absinken des Brennraumdrucks während und nach der Verbrennung. In dem Moment, in dem der Verbrennungsdruck den Saugrohrdruck PS unterschreitet, entsteht ein Druckgefälle am Einlassventil 18, das zum Einströmen von Sekundärluft genutzt werden kann.

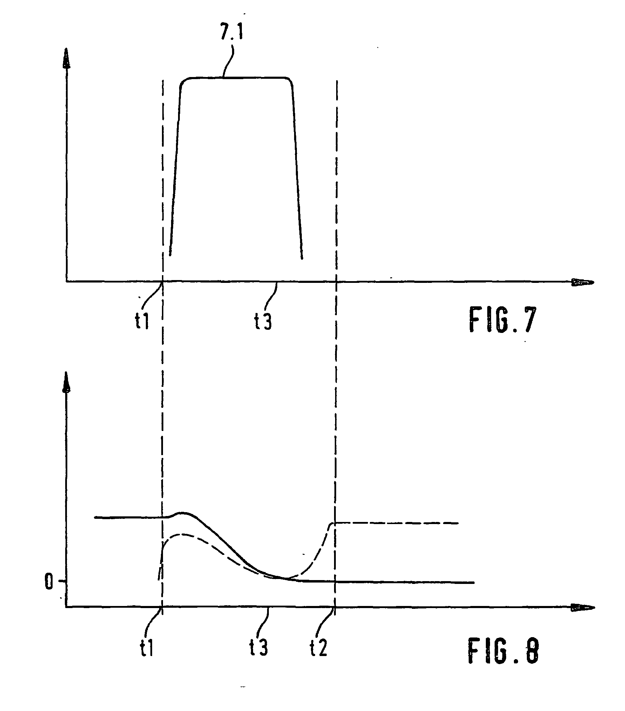

Die Figur 6 zeigt die Ventilerhebung eines Einlassventils 18. Dabei entsprechen die Spitzen einem vollgeöffneten Ventil. Die in der Figur 6 linke Ventilöffnung entspricht dabei der zweiten Teilperiode. Bei offenem Einlassventil 18 strömt Luft aus dem Saugrohr in den Brennraum 12, was den Druck im Brennraum 12 auf den Wert des Saugrohrdrucks ansteigen lässt. Dies zeigt sich im Verlauf des Abschnitts 5.2 der Figur 5. Die zur zweiten Teilperiode zugehörige Öffnung des Einlassventils 18 ist in der Figur 6 mit der Ziffer 6.1 bezeichnet. Diese Öffnung dauert nur eine relativ kurze Zeit, da zum Oxidieren des aus der vorhergehenden Verbrennung der Brennraumfüllung resultierenden Restgases keine Neufüllung des Brennraums nötig ist. Die Neufüllung des Brennraums mit Frischgas findet durch den breiteren Ventilöffnungsimpuls 6.2 in der Figur 6 statt. Dieser Öffnungsimpuls 6.2 entspricht dabei der oben genannten ersten Teilperiode. Etwa zwischen den beiden Öffnungen des Einlassventils 18 wird das Auslassventil 36 zum Ausstoßen der verbrannten und durch die Sekundärluft nachoxidierten Restgase geöffnet. Der Öffnungsimpuls für das Auslaßventil 36 wird durch die Kurve 7.1 in Fig. 7 dargestellt. Aus diesem Grund bleibt der Zylinderinnendruck auch nach dem Schließen des Einlassventil im Bereich des Abgasgegendruckes. Dabei ist angenommen, dass der Abgasgegendruck ungefähr dem Umgebungsdruck entspricht, wie er auch im Saugrohr herrscht. Zum Zeitpunkt t3 wird das Auslassventil 36 geschlossen, zum Zeitpunkt t2 wird auch der Ansaugvorgang durch Schließen des Einlassventils 18 beendet. Unter der Voraussetzung, dass die Brennraumfüllung über das Einlassventil eingestellt wird und die gewünschte Füllung relativ klein ist, reicht bereits ein Teil der Abwärtsbewegung des Kolbens 14 aus, um die gewünschte Füllung anzusaugen. Dabei ist ein möglichst hoher Druck im Saugrohr vorteilhaft. bei einem Saugmotor ist dies etwa der Umgebungsdruck. Zum Zeitpunkt t2 ist der Kolben t14 daher noch nicht in seinem unteren Totpunkt angekommen.

Die weitere Bewegung des Kolbens 14 in Richtung seines unteren Totpunkts vergrößert den Brennraum 12 bei geschlossenen Ventilen 18, 36 und führt damit zu einer weiteren Absenkung des Druckes im Brennraum. Anschließend läuft der Kolben wieder in Richtung seines oberen Totpunktes, was den Druck im Brennraum entsprechend steigen lässt. Dieser Anstieg nach dem vorübergehenden weiteren Absinken bildet sich in der Figur 5 im Kurvenabschnitt 5.3 ab.

Die Figur 8 zeigt in der durchgezogenen Linie den korrespondierenden Restgasgehalt im Brennraum 12 und die gestrichelte Linie in der Figur 8 zeigt den korrespondierenden Frischluftanteil. Zunächst, links von t1, befindet sich nur Restgas aus der Verbrennung im Brennraum. Zum Zeitpunkt t1 wird bei niedrigem Verbrennungsenddruck das Einlassventil 18 geöffnet. Folglich strömt kein Restgas aus dem Brennraum aus sondern es strömt Frischgas in den Brennraum ein. Beide Gasanteile reagieren miteinander, was zu einem leichten Anstieg des Restgasanteils bei fallendem Frischgasanteil führt. Im weiteren Verlauf sinken beide Anteile bei geöffnetem Auslassventil 36 auf einen kleinen Wert ab, bevor der Frischgasanteil infolge der Öffnungseinlassventils 18 auf seinen Endwert ansteigt. Dieser Anstieg ist zum Zeitpunkt t2 beim Schließen des Einlassventils 18 abgeschlossen.

In der Figur 3 korrespondieren die Schritte 3.8 bis 3.12 zu den beschriebenen Signalverläufen: Wenn die Abfrage im Schritt 3.8 bejaht wird, d. h. wenn der Zylinderinnendruck am Ende des Verbrennungstaktes den Saugrohrdruck unterschreitet, wird das Einlassventil in der zweiten Teilperiode im Schritt 3.9 öffnend angesteuert. Schritt 3.10. repräsentiert die Öffnung des Auslassventils entsprechend der Kurve 7.1 in Figur 7 und Schritt 3.11 repräsentiert die Öffnung des Einlassventils in der ersten Teilperiode entsprechend dem Kurvenzug 6.2 in Figur 6. Schritt 3.12 repräsentiert eine Rückkehr ins Hauptprogramm.

Das erfindungsgemäße Verfahren ist sowohl für Saugmotoren als auch für aufgeladene Motoren anwendbar. Bei Turbomotoren ist eine Sekundärluftdosierung gemäß dem vorgestellten erfindungsgemäßen Verfahren auch noch bei größeren Zylinderfüllungen möglich, da der Druck im Saugrohr bei Turbomotoren höher ist und die erfindungsgemäße Sekundärluftzufuhr über ein geöffnetes Einlassventil am Ende des Verbrennungstaktes ein gewisses Druckgefälle am Einlassventil voraussetzt. Das erfindungsgemäße Verfahren eignet sich insbesondere für Verbrennungsmotoren/Kolbenbrennkraftmaschinen mit Benzin-Direkteinspritzung, wie es in der Figur 1 dargestellt ist.

Bei Saugrohreinspritznng könnte sich der Kraftstoffwandfilm an der Saugrohrinnenwand als störend erweisen.

## Patentansprüche

1. Verfahren zur Steuerung der Öffnung wenigstens eines Einlassventils eines Brennraums einer periodisch arbeitenden Kolbenbrennkraftmaschine, wobei das wenigstens eine Einlassventil während einer ersten Teilperiode einer Arbeitsperiode der Kolbenbrennkraftmaschine zur Füllung des Brennraums geöffnet wird und wobei das wenigstens eine Einlassventil des Brenmaums während einer zweiten Teilperiode der Arbeitsperiode geöffnet wird, **dadurch gekennzeichnet, dass** die zweite Teilperiode in einer Expansionsphase beginnt und keine Überschneidung mit der ersten Teilperiode aufweist.

2. Verfahren nach Anspruch 1, **dadurch gekennzeichnet, dass** die zweite Teilperiode vor einem unteren Totpunkt des dem Brennraum zugehörigen Kolbens beginnt.

3. Verfahren nach Anspruch 2, **dadurch gekennzeichnet, dass** die zweite Teilperiode beginnt, wenn der Druck auf der dem Brennraum zugewandten Seite des Einlassventils den Wert des Druckes auf der dem Brennraum abgewandten Seite des Einlassventils unterschreitet

4. Verfahren nach einem der vorhergehenden Ansprüche, **dadurch gekennzeichnet, dass** die Länge der zweiten Teilperiode und/oder das Ausmaß der Öffnung des Einlassventils von Betriebskenngrößen der Kolbenbrennkraftmaschine abhängig ist.

5. Verfahren nach einem der vorhergehenden Ansprüche, **dadurch gekennzeichnet, dass** die Füllung des Brennraums durch ein frühes Schließen des Einlassventils beschränkt wird und dass das Verfahren bei möglichst hohem Saugrohrdruck durchgeführt wird.

6. Verfahren nach einem der vorhergehenden Ansprüche, **dadurch gekennzeichnet, dass** es unterhalb eines Schwellenwertes für die Brennraumfüllung durchgeführt wird.

7. Verfahren nach einem der vorhergehenden Ansprüche, **dadurch gekennzeichnet, dass** bei einem Brennraum mit mehreren Einlassventilen wenigstens ein erstes Einlassventil während der ersten Teilperiode geöffnet wird und wenigstens ein zweites Einlassventil während der zweiten Teilperiode geöffnet wird.

8. Steuereinrichtung mit Mitteln zur Durchführung des Verfahrens nach einem dem Ansprüchen 1 bis 7.

9. Steuereinrichtung nach Anspruch 8, **dadurch gekennzeichnet, dass** diese Steuereinrichtung die Leerlaufdrehzahl der Kolbenbrennkraftmschine erhöht, wenn ein Verfahren nach den Ansprüchen 1 bis 6 durchgeführt wird.

10. Steuereinrichtung nach Anspruch 9, **dadurch gekennzeichnet, dass** die Steuereinrichtung die Schaltpunkte eines automatischen Getriebes zu hohen Drehzahlen verlegt, wenn ein Verfahren nach den Ansprüchen 1 bis 6 durchgeführt wird.

11. Steuereinrichtung nach Anspruch 9, **dadurch gekennzeichnet dass** die Steuereinrichtung die Kolbenbrernkraftmaschine bei der Durchführung eines der Verfahren nach den Ansprüchen 1 bis 7 mit bei zunehmender Brennraumfüllung zunehmend mageren Kraftstoff/Luftgemisch betreibt.

## Claims

1. Method for controlling the opening of at least one intake valve of a combustion chamber of a piston internal combustion engine which operates in a periodic manner, with the at least one intake valve being opened during a first partial period of a working period of the piston internal combustion engine in order to fill the combustion chamber with charge, and with the at least one intake valve of the combustion chamber being opened during a second partial period of the working period, **characterized in that** the second partial period begins in an expansion phase and does not overlap the first partial period.

2. Method according to Claim 1, **characterized in that** the second partial period begins before a bottom dead centre of the piston associated with the combustion chamber.

3. Method according to Claim 2, **characterized in that** the second partial period begins when the pressure on that side of the intake valve which faces towards the combustion chamber falls below the value of the pressure on that side of the intake valve which faces away from the combustion chamber.

4. Method according to one of the preceding claims, **characterized in that** the length of the second partial period and/or the extent of opening of the intake valve is dependent on characteristic operating variables of the piston internal combustion engine.

5. Method according to one of the preceding claims, **characterized in that** the charge of the combustion chamber is restricted by an early closing of the intake valve, and **in that** the method is carried out at the highest possible suction-pipe pressure.

6. Method according to one of the preceding claims, **characterized in that** said method is carried out when the combustion chamber charge is below a threshold value.

7. Method according to one of the preceding claims, **characterized in that**, in a combustion chamber with a plurality of intake valves, at least one first intake valve is opened during the first partial period, and at least one second intake valve is opened during the second partial period.

8. Control device having means for carrying out the method according to one of Claims 1 to 7.

9. Control device according to Claim 8, **characterized in that** said control device increases the idle speed of the piston internal combustion engine when a method according to one of Claims 1 to 6 is carried out.

10. Control device according to Claim 9, **characterized in that** the control device moves the shift points of an automatic transmission to high speeds when a method according to one of Claims 1 to 6 is carried out.

11. Control device according to Claim 9, **characterized in that**, when carrying out a method according to one of Claims 1 to 7, the control device operates the piston internal combustion engine with an increasingly lean air/fuel mixture as the combustion chamber charge is increased.

## Revendications

1. Procédé pour piloter l'ouverture d'au moins une soupape d'admission d'un moteur à combustion interne à pistons, dans laquelle l'au moins une soupape d'admission étant ouverte pendant une première fraction de la période de travail du moteur, afin de remplir la chambre de combustion et étant ouverte également pendant une seconde fraction de la période de travail,
**caractérisé en ce que**
cette seconde fraction commence à une phase d'expansion et ne se recouvre pas avec la première fraction.

2. Procédé selon la revendication 1,
**caractérisé en ce que**
la seconde fraction de la période de travail commence au point mort bas du piston circulant dans la chambre de travail.

3. Procédé selon la revendication 2,
**caractérisé en ce que**
la seconde fraction de période commence quand la pression exercée sur le côté de la soupape d'admission en regard de la chambre de combustion passe en dessous de la valeur de la pression régnant sur le côté de la soupape d'admission éloigné de la chambre de combustion.

4. Procédé selon une des revendications précédentes,
**caractérisé en ce que**
la durée de la seconde fraction de période et/ou la dimension de l'ouverture de la soupape d'admission dépend des grandeurs de fonctionnement du moteur à pistons.

5. Procédé selon une des revendications précédentes,
**caractérisé en ce que**
le remplissage de la chambre de combustion est limité par une fermeture précoce de la soupape d'admission et le procédé est mis en oeuvre avec une pression la plus élevée possible dans la tubulure d'admission.

6. Procédé selon une des revendications précédentes,
**caractérisé en ce qu'**
il est mis en oeuvre en dessous d'une valeur de seuil de remplissage de la chambre de combustion.

7. Procédé selon une des revendications précédentes,
**caractérisé en ce que**
dans une chambre de combustion comportant plusieurs soupapes d'admission, au moins une de celles-ci est ouverte pendant la première fraction de période, tandis qu'une seconde soupape d'admission est ouverte pendant la seconde fraction de la période de travail.

8. Dispositif de pilotage comportant des moyens de mise en oeuvre du procédé selon une des revendications 1 à 7.

9. Dispositif de pilotage selon la revendication 8,
**caractérisé en ce que**
ce dispositif augmente la vitesse de ralenti du moteur à combustion interne à pistons quand un procédé selon les revendications 1 à 6 est mis en oeuvre.

10. Dispositif de pilotage selon la revendication 9,
**caractérisé en ce que**
le dispositif de pilotage déplace vers des vitesses de rotation plus élevées, une transmission automatique quand est mis en oeuvre un procédé selon les revendications 1 à 6.

11. Dispositif de pilotage selon la revendication 9,
**caractérisé en ce que**
le moteur à combustion interne à pistons, quand est mis en oeuvre un procédé selon les revendications 1 à 7, fonctionne avec un mélange air/carburant qui devient de plus en plus maigre quand le remplissage de la chambre de combustion augmente.
